(19) Europäisches Patentamt
European Patent Office
Office européen des brevets

(11) EP 3 259 300 B1

(12) # EUROPÄISCHE PATENTSCHRIFT

(45) Veröffentlichungstag und Bekanntmachung des Hinweises auf die Patenterteilung:
**09.09.2020 Patentblatt 2020/37**

(21) Anmeldenummer: **16704241.5**

(22) Anmeldetag: **15.02.2016**

(51) Int Cl.:
***C08G 64/38*** (2006.01)

(86) Internationale Anmeldenummer:
**PCT/EP2016/053113**

(87) Internationale Veröffentlichungsnummer:
**WO 2016/131747 (25.08.2016 Gazette 2016/34)**

(54) **VERFAHREN ZUR HERSTELLUNG VON POLYCARBONATEN DURCH DIE UMESTERUNG VON DITHIOCARBONATEN ODER DEREN SELEN-ANALOGA MIT BISPHENOLEN**

METHOD FOR PRODUCING POLYCARBONATES BY THE TRANSESTERIFICATION OF DITHIOCARBONATES OR THEIR SELENIUM ANALOGUES WITH POLYOLS

PROCÉDÉ DE FABRICATION DE POLYCARBONATES PAR LA TRANSESTÉRIFICATION DE DITHIOCARBONATES OU SES ANALOGUES DE SÉLÉNIUM AVEC POLYOLES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.02.2015 EP 15155655**

(43) Veröffentlichungstag der Anmeldung:
**27.12.2017 Patentblatt 2017/52**

(73) Patentinhaber: **Covestro Deutschland AG**
**51373 Leverkusen (DE)**

(72) Erfinder:
- **MÜLLER, Thomas, Ernst**
  **44797 Bochum (DE)**
- **GÜRTLER, Christoph**
  **50735 Köln (DE)**
- **KOLB, Nicolai**
  **52070 Aachen (DE)**
- **KÖHLER, Burkhard**
  **34289 Zierenberg (DE)**
- **LEITNER, Walter**
  **52074 Aachen (DE)**
- **HEIJL, Jan**
  **9160 Lokeren (BE)**
- **GROSSE BÖWING, Alexandra**
  **41541 Dormagen (DE)**

(74) Vertreter: **Levpat**
**c/o Covestro AG**
**Gebäude 4825**
**51365 Leverkusen (DE)**

(56) Entgegenhaltungen:
**WO-A1-97/03104**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 259 300 B1

## Beschreibung

Die vorliegende Erfindung betrifft ein Verfahren zur Herstellung von aromatischen Polycarbonaten, umfassend den Schritt der Reaktion von Bisphenolen mit Dithiocarbonaten oder deren Selen-Analoga in Gegenwart eines Katalysators. Sie betrifft weiterhin die Verwendung von Dithiocarbonaten bzw. deren Selen-Analoga als Umesterungsreagenzien für die Herstellung von Polycarbonaten.

Polycarbonat basierend auf Bisphenol-A ist von großem technischem und industriellem Interesse. Die Herstellung von Polycarbonat erfolgt dabei für gewöhnlich durch Phosgenierung von Bisphenol-A nach dem Phasengrenzflächenverfahren oder durch katalytische Umesterung von Diarylcarbonaten, besonders Diphenylcarbonat, mit Bisphenol-A in der Schmelze.

Beim Phasengrenzflächenverfahren wird in einer mehrstufigen Reaktion Phosgen in wenigstens einem Lösungsmittel mit einer wässrigen alkalischen Lösung des aromatischen Diols umgesetzt. Das Polycarbonat wird als Lösung in dem organischen Lösungsmittel erhalten. Die Aufarbeitung der Polymerlösung beinhaltet die Rückführung des Lösungsmittels, wobei Abwasserströme entstehen.

Die Herstellung von Polycarbonat nach dem Schmelzeumesterungsverfahren wird beispielsweise in US 5,399,659 und US 5,340,905 beschrieben. Die Herstellung von aromatischem Polycarbonat erfolgt dabei ausgehend von aromatischen Diolen, beispielsweise Bisphenol-A, und Diarylcarbonaten, beispielsweise Diphenylcarbonat, unter Verwendung verschiedener Katalysatoren und unter Verwendung unterschiedlicher Temperaturen und Drücke, um die entstehenden Nebenprodukte kontinuierlich zu entfernen.

Das beim Schmelzeumesterungsverfahren eingesetzte Diarylcarbonat kann kommerziell durch Umesterung von Dialkylcarbonat mit Phenolen hergestellt werden.

So beschreibt EP 0 781 760 A1 ein kontinuierliches Verfahren zur Herstellung aromatischer Carbonate durch Reaktion eines Dialkylcarbonates mit einer aromatischen Hydroxyverbindung in Anwesenheit eines Katalysators und kontinuierlicher Entfernung des bei der Reaktion entstehenden Diarylcarbonats, der alkoholischen Nebenprodukte, des Dialkylcarbonats und der aromatischen Hydroxyverbindung, wobei das Dialkylcarbonat und die aromatische Hydroxyverbindung in die Reaktion zurückgeführt werden.

WO 2004/016577 A1 beschreibt ein Verfahren zur Herstellung von Diarylcarbonaten aus Dialkylcarbonat und einer aromatischen Hydroxyverbindung in Gegenwart eines Katalysators in mehreren getrennten und in Serie geschalteten Reaktionszonen einer Reaktoranordnung, wobei die anfallende Kondensationswärme bei der Kondensation des Dampfstromes der letzten Reaktionszone zur Erwärmung des in die erste Reaktionszone eingeleiteten Flüssigkeitsstromes verwendet wird. Nachteilig an diesem Verfahren ist jedoch die aufwändige Reaktoranordnung. Zudem ist die energetische Integration dieses Verfahrens verbesserungswürdig und nur auf den Verfahrensabschnitt der Reaktion begrenzt. Anschließende Schritte für die Aufarbeitung werden nicht beschrieben.

Ein Nachteil der direkten Reaktion von Dialkylcarbonaten mit Phenolen ist die Tendenz, dass die phenolische OH-Gruppe durch das Carbonat alkyliert wird. Dies erfolgt insbesondere bei der Reaktion von Dimethylcarbonat mit Phenolen, so dass der entsprechende Methylether gebildet wird. Diese Nebenreaktion ist unter anderem in Catal. Commun. 33 (2013) 20-23 beschrieben. Aus diesem Grund werden Dialkylcarbonate nicht direkt zur Polykondensation von Bisphenol-A zu aromatischem Polycarbonat verwendet, sondern zunächst mit Monophenolen zu Diarylcarbonaten umgesetzt. Dies ist beispielsweise im Asahi-Prozess realisiert, welcher in Green Chem. 5 (2003) 497-507 detailliert beschrieben ist.

Aus WO 97/03104 A1 ist die Herstellung von aliphatischen Polycarbonaten durch Umsetzung von Estern oder Thioestern der Kohlensäure mit Alkylenglykolen bekannt.

Die Aufgabe, die der Erfindung zugrunde lag, bestand demnach darin, ein verbessertes Verfahren zur Herstellung von aromatischen Polycarbonaten bereitzustellen, wobei im Vergleich zum Phasengrenzflächenverfahren weniger Reaktions- und Aufarbeitungsschritte benötigt werden und wobei die bei der Polykondensation entstehenden Nebenprodukte einfacher abzutrennen sind, als bei Reaktionen, die nach dem Stand der Technik beschrieben sind.

Erfindungsgemäß gelöst wird die Aufgabe durch ein Verfahren zur Herstellung von Polycarbonaten, umfassend den Schritt der Reaktion von Bisphenolen mit einem Umesterungsreagenz in Gegenwart eines Katalysators, wobei das Umesterungsreagenz eine Verbindung der allgemeinen Formel (I) umfasst:

$$R\text{-}X\text{-}C(O)\text{-}X'\text{-}R' \qquad (I)$$

wobei

X und X' unabhängig voneinander für S oder Se, vorzugsweise S stehen, und

R und R' unabhängig voneinander für Alkyl oder Aryl oder

R und R' gemeinsam für eine Alkylenkette stehen.

Das erfindungsgemäße Verfahren bietet den Vorteil, dass die Herstellung der aromatischen Polycarbonate ohne Nebenreaktionen erfolgt, während bei der Herstellung von aromatischen Polycarbonaten durch Umesterung von aliphatischen Carbonaten die Alkylierung der Phenole eine nennenswerte Nebenreaktion darstellt.

Die bei der Reaktion entstehenden Thiole oder Selenole können aus der Reaktionsmischung oder dem fertigen Produkt destillativ entfernt werden.

Ebenfalls hat das erfindungsgemäße Verfahren den Vorteil, dass kurzkettige S,S'-Dialkyldithiocarbonate bei Raumtemperatur flüssig sind, während Diarylcarbonate Feststoffe sind. Durch den flüssigen Aggregatszustand wird die Verarbeitung des Gemisches zu Beginn der Reaktion vereinfacht, da Phenole in den S,S'-Dialkyldithiocarbonaten gelöst werden können.

Verfahren zur Herstellung von Polycarbonaten basierend auf Dithiocarbonaten sind vorteilhaft nicht nur hinsichtlich der Herstellung des Polycarbonats, sondern auch im Hinblick auf die Herstellung des Dithiocarbonats. So können Dialkyldithiocarbonate analog der Dialkylcarbonate durch Phosgenierung der entsprechenden Alkanthiolverbindung hergestellt werden. Ebenfalls bekannt ist die Synthese von zyklischen Dithiocarbonaten unter Einsatz von Katalysatoren (Tetrahedron Lett. 34 (1974) 2899 - 2900) und die nicht-katalysierte Synthese von linearen Dithiocarbonaten (Synlett 10 (2005) 1535 - 1538) aus CO und den entsprechenden Thiolen mit Hilfe von Selen. Die phosgenbasierte Herstellung von Dithiocarbonaten der Formel (I) ist vorteilhaft gegenüber der phosgenbasierten Herstellung von Diarylcarbonaten, da die Thioverbindungen u.a. niedrigere Siedepunkte, niedrigere Molmassen und kleinere molare Volumina aufweisen. Die phosgenfreie Herstellung von Dithiocarbonaten der Formel (I) ist vorteilhaft gegenüber der bekannten phosgenfreien Herstellung von Diarylcarbonaten, da der Umesterungsschritt von Dialkylcarbonat zu Diarylcarbonat eingespart wird. Im Gegensatz zu Dialkylcarbonaten können Dialkyldithiocarbonate ohne Umesterung zum Diarylcarbonat direkt in der Herstellung von Polycarbonaten eingesetzt werden.

Im Rahmen der vorliegenden Erfindung beinhaltet der Begriff "Polycarbonate" sowohl oligomere als auch polymere Polycarbonatverbindungen. Nach dem erfindungsgemäßen Verfahren erhaltene polymere Polycarbonate weisen vorzugsweise ein zahlenmittleres Molekulargewicht $M_n$ von 18'000 bis 80'000 g/mol, besonders bevorzugt von 19'000 bis 50'000 g/mol auf. Das zahlenmittlere Molekulargewicht kann durch Messung mittels Gelpermeationschromatographie in THF gegen Polystyrolstandards ermittelt werden.

In der allgemeinen Formel (I) stehen X und X' unabhängig voneinander für S oder Se, bevorzugt für S.

Beispiele für geeignete Verbindungen der allgemeinen Formel (I) sind solche, in denen R und R' unabhängig voneinander für lineares oder verzweigtes, gegebenenfalls substituiertes $C_1$-$C_{34}$-Alkyl oder gegebenenfalls substituiertes $C_5$-$C_{34}$-Aryl, bevorzugt für $C_1$-$C_6$-Alkyl oder $C_6$-$C_{10}$-Aryl, besonders bevorzugt für $C_1$-Alkyl, $C_2$-Alkyl oder $C_6$-Aryl stehen. Dabei können R und R' gleich oder verschieden sein. Bevorzugt sind R und R' gleich.

Die Reste R und R' können auch gemeinsam für eine gegebenenfalls substituierte $C_2$-$C_{12}$-Alkylenkette stehen.

$C_1$-Alkyl in der Formel (I) steht dabei für Methyl, $C_2$-Alkyl für Ethyl, $C_6$-Aryl für Phenyl.

$C_1$-$C_6$-Alkyl in der Formel (I) stehen darüber hinaus beispielsweise für n-Propyl, iso-Propyl, n-Butyl, sec.-Butyl, tert.-Butyl, n-Pentyl, 1-Methylbutyl, 2-Methylbutyl, 3-Methylbutyl, neo-Pentyl, 1-Ethylpropyl, Cyclohexyl, Cyclopentyl, n-Hexyl, 1,1-Dimethylpropyl, 1,2-Dimethylpropyl, 1-Methylpentyl, 2-Methylpentyl, 3-Methylpentyl,4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl oder 1-Ethyl-2-methylpropyl, $C_1$-$C_{34}$-Alkyl darüber hinaus beispielsweise für n-Heptyl und n-Octyl, Pinakyl, Adamantyl, die isomeren Menthyle, n-Nonyl, n-Decyl, n-Dodecyl, n-Tridecyl, n-Tetradecyl, n-Hexadecyl oder n-Octadecyl. Gleiches gilt für den entsprechenden Alkylrest beispielsweise in Aralkyl- bzw. Alkylarylresten. Alkylenreste in den entsprechenden Hydroxyalkyl- oder Aralkyl- bzw. Alkylarylresten stehen beispielsweise für die den vorangehenden Alkylresten entsprechenden Alkylenreste.

Aryl steht für einen carbocyclischen aromatischen gegebenenfalls Heteroatom-substituierten Rest mit 5 bis 34 Ringatomen. Gleiches gilt für den aromatischen Teil eines Arylalkylrestes, auch Aralkylrest genannt, sowie für Arylbestandteile komplexerer Gruppen, wie z.B. Arylcarbonylresten.

Arylalkyl bzw. Aralkyl bedeutet jeweils unabhängig einen geradkettigen, cyclischen, verzweigten oder unverzweigten Alkyl-Rest nach vorstehender Definition, der einfach, mehrfach oder vollständig durch Aryl-Reste gemäß vorstehender Definition substituiert sein kann.

Besonders bevorzugte Verbindungen der allgemeinen Formel (I) sind Dimethyldithiocarbonat, Diethyldithiocarbonat und Diphenyldithiocarbonat.

Verbindungen der Formel (I) können entsprechend den Dialkyl- oder Diarylcarbonaten hergestellt werden. Bekannte Methoden für die Herstellung von Dialkyl- oder Diarylcarbonaten sind zum Beispiel die Gasphasenphosgenierung oder die Flüssigphasenphosgenierung unter Druck ohne Lösungsmittel (EP 2 586 787 A1), die Phasengrenzflächenphosgenierung, die oxidative Carbonylierung (US 2003 055199 A), Carboxylierung weder direkt (WO 2008 044575 A1), oder durch Umesterung von zyklischen Carbonaten (z.B. WO 2007 069529, WO 2008 065874). Geeignete Katalysatoren für die Herstellung von Dialkyl- und Diarylcarbonaten sind bekannt und können für die Herstellung der

Verbindungen der Formel (I) eingesetzt werden.

Erfindungsgemäß werden die Umesterungsreagenzien nach Formel (I) zur Herstellung von Polycarbonaten mit Bisphenolen, vorzugsweise der Formel (II) umgesetzt:

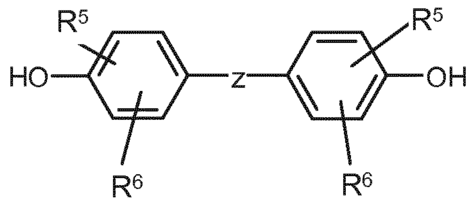

in der

$R^5$ und $R^6$ unabhängig voneinander für H, $C_1$-$C_{18}$-Alkyl-, $C_1$-$C_{18}$-Alkoxy, Halogen wie Cl oder Br oder für jeweils gegebenenfalls substituiertes Aryl oder Aralkyl, bevorzugt für H oder $C_1$-$C_{12}$-Alkyl, besonders bevorzugt für H oder $C_1$-$C_8$-Alkyl und ganz besonders bevorzugt für H oder Methyl stehen, und

Z für eine Einfachbindung, $-SO_2-$, -CO-, -O-, -S-, $C_1$-$C_6$-Alkylen, $C_2$-$C_5$-Alkyliden oder $C_6$-$C_{12}$-Arylen, welches gegebenenfalls mit weiteren Heteroatome enthaltenden aromatischen Ringen kondensiert sein kann, steht.

Beispiele solcher Verbindungen, die in dem erfmdungsgemäßen Verfahren eingesetzt werden können sind Dihydroxydiarylalkane wie Hydrochinon, Resorcin, Dihydroxydiphenyl, Bis-(hydroxyphenyl)-alkane, Bis(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, $\alpha,\alpha'$-Bis-(hydroxyphenyl)-diisopropylbenzole, sowie deren alkylierte, kernalkylierte und kernhalogenierte Verbindungen.Beispiele für Bisphenole sind 4,4'-Dihydroxydiphenyl, 2,2-Bis-(4-hydroxyphenyl)-1 -phenylpropan, 1,1 -Bis-(4-hydroxyphenyl)-phenylethan, 2,2-Bis-(4-hydroxyphenyl)-methan (Bisphenol-F), 2,2-Bis-(4-hydroxyphenyl)-propan (Bisphenol-A (BPA)), 2,4-Bis-(4-hydroxyphenyl)-2-metliylbutan, 1,3-Bis-[2-(4-hydroxyphenyl)-2-propyl]-benzol (Bisphenol-M), 2,2-Bis-(3-methyl-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)- sulfon, 2,4-Bis-(3,5-dimethyl-4-hydroxyphenyl)-2-methylbutan, 1,3-Bis-[2-(3,5-dimethyl-4-hydroxyphenyl)- 2-propyl]-benzol, 1,1-Bis-(4-hydroxyphenyl)-cyclohexan und 1,1-Bis-(4-hydroxyphenyl)-3,3,5-trimethyl-cyclohexan (Bisphenol-TMC).

Besonders bevorzugte Bisphenole sind 4,4'-Dihydroxydiphenyl, 1,1-Bis-(4-Hydroxyphenyl)-phenylethan, 2,2-Bis-(4-hydroxyphenyl)-methan (Bisphenol-F), 2,2-Bis-(4-hydroxyphenyl)-propan (Bisphenol-A (BPA)), 2,2-Bis(3,5-dimethyl-4-hydroxyphenyl)-propan, 1,1-Bis-(4-hydroxyphenyl)-cyclohexan und 1,1-Bis-(4-hydroxyphenyl)-3,3,5-trimethylcyclohexan (Bisphenol-TMC).

Geeignete Bisphenole sind auch in US 2 999 835 A, US 3 148 172 A, US 2 991 273 A, US 3 271 367 A, US 4 982 014 A und US 2 999 846 A, in den deutschen Offenlegungsschriften DE 15 70 703 A, DE 20 63 050 A, DE 2036 052 A, DE 22 11 956 A und DE 38 32 396 A, der französischen Patentschrift FR 1 561 518 A, in der Monographie von H. Schnell, Chemistry and Physics of Polycarbonates, Interscience Publishers, New York 1964, S. 28ff; S.102ff und von D.G. Legrand, J.T. Bendler, Handbook of Polycarbonate Science and Technology, Marcel Dekker New York 2000, S. 72ff. beschrieben.

Bevorzugt werden die Verbindung der Formel (I) und das Bisphenol in dem erfindungsgemäßen Verfahren in einem Stoffmengenverhältnis von mindestens 1:1, besonders bevorzugt 1:1 bis 2:1, eingesetzt.

Beispiele für geeignete Katalysatoren sind anorganische oder organische basische Verbindungen, beispielsweise Lithium-, Natrium-, Kalium-, Cäsium-, Calcium-, Barium- und Magnesiumsalze ausgewählt aus der Gruppe der -hydroxide, -carbonate, -halogenide, -phenolate, -diphenolate, - fluoride, -acetate, -phosphate, - hydrogenphosphate und -boranate, darüber hinaus Stickstoff- und Phosphorbasen, wie beispielsweise Tetramethylammoniumhydroxid, Tetramethylammoniumacetat, Tetramethylammoniumfluorid, Tetramethylammoniumtetraphenylboranat, Tetraphenylphosphoniumfluorid, Tetra-phenylphosphoniumtetraphenylboranat, Dimethyldiphenylammoniumhydroxid, Tetraethylammoniumhydroxid, 1,8-Diazabicyclo[5.4.0]undec-7-en (DBU), 1,5-Diazabicyclo[4.3.0]non-5-en (DBN), und Guanidinsysteme, wie beispielsweise das 1,5,7-Triazabicyclo-[4.4.0]-dec-5-en, 7-Phenyl-1,5,7-triazabicyclo-[4.4.0]-dec-5-en, 7-Methyl-1,5,7-tria-zabicyclo-[4.4.0]-dec-5-en, 7,7'-Hexylidendi-1,5,7-triazabi-cyclo-[4.4.0]-dec-5-en, 7,7'-Decyliden-di-1,5,7-tiiazabicyclo-[4.4.0]-dec-5-en, 7,7'-Dodecyliden-di-1,5,7-tri-aza-bicyclo-[4.4.0]-dec-5-en sowie Phosphazene, wie beispielsweise tert.-Octyl-imino-tris-(dimethylamino)-phosphoran (Phosphazen-Base P1-t-Oct), tert.-Butyl-imino-tris-(dimethylamino)-phosphoran (Phosphazen-Base Pl-t-Butyl) und 2-tert.-Butylimino-2-diethylamino-1,3-dimethyl-perhydro-1,3,2-diaza-2-phosphoran (BEMP), und phosphorhaltige Käfigmoleküle, wie Trialkylprophosphatrane, wie z.B. Trimethyl-, Triethyl-, Triisobutyl-, Tribenzyl- oder Tri-4-methoxybenzyl- prophosphatran und Protonenschwämme, wie

1,8-Bis(dimethylamino)naphthalin oder 1,8-Bis(hexamethyltriamino-phosphazenyl)naphthalin.

Diese Katalysatoren werden bevorzugt in Mengen von 1 bis $10^{-8}$ Mol, bezogen auf 1 Mol Bisphenol eingesetzt.

Die Katalysatoren können auch in Kombination von zwei oder mehreren Katalysatoren eingesetzt werden.

Die Katalysatoren können nach Abschluss der Reaktion im Produkt belassen, abgetrennt, neutralisiert oder maskiert werden. Vorzugsweise wird der Katalysator bzw. werden die Katalysatoren im Produkt belassen.

Die nach dem erfindungsgemäßen Verfahren erhältlichen aromatischen Polycarbonate können durch den Einsatz geringer Mengen Verzweiger kontrolliert verzweigt werden. Geeignete Verzweiger sind: Phloroglucin, 4,6-Dimethyl-2,4,6-tri-(4-hydroxyphenyl)-heptan, 1,3,5-Tri-(4-hydroxyphenyl)-benzol, 1,1,1 -Tri-(4-hydroxyphenyl)-ethan, Tri-(4-hydroxyphenyl)-phenylmethan, 2,2-Bis-[4,4-bis-(4-hydroxyphenyl)-cyclohexyl]-propan, 2,4-Bis-(4-hydroxyphenyl-isopropyl)-phenol, 2,6-Bis-(2-hydroxy-5'-methyl-benzyl)-4-methylphenol, 2-(4-Hydroxyphenyl)-2-(2,4-dihydroxyphenyl)-propan, Hexa-(4-(4-hydroxyphenyl-isopropyl)-phenyl)-orthoterephthalsäure-ester, Tetra-(4-hydroxyphenyl)-methan, Tetra-(4-(4-hydroxyphenyi-isopropyl)-phenoxy)-methan, Isatinbiskresol, Pentaerythrit, 2,4-Dihydroxybenzoesäure, Trimesinsäure, Cyanursäure, 1,4-Bis-(4',4"-dihydroxytriphenyl)-methyl)-benzol und $\alpha,\alpha',\alpha''$-Tris-(4-hydroxyphenyl)-1,3,4-triiso-propenylbenzol. Besonders bevorzugt sind 1,1,1-Tri-(4-hydioxyphenyl)-ethan (THPE) und Isatinbiskresol (TBK).

Diese Verzweiger können in jeder beliebigen Stufe des Verfahrens zugegeben werden. Die Zugabe kann beispielsweise in einer ersten Stufe bei der Herstellung von niedermolekularen Polycarbonaten erfolgen. Die Zugabe kann ebenfalls in einer zweiten Stufe bei der Schmelzeumesterung von niedermolekularen Polycarbonaten zu hochmolekularen Polycarbonaten erfolgen.

Die erfindungsgemäß erhaltenen Polycarbonate können Kettenabbrecher enthalten. Entsprechende Kettenabbrecher sind unter anderem aus EP 335 214 A und DE 3 007 934 A bekannt. Beispiele für Kettenabbrecher sind Monophenole wie Phenol, Alkylphenole wie Kresole, p-tert-Butylphenol, p-n-Octylphenol, p-iso-Octylphenol, p-n-Nonylphenol und p-iso-Nonylphenol, Halogenphenole wie p-Chlorphenol, 2,4-Dichlorphenol, p-Bromphenol und 2,4,6-Tribromphenol sowie p-Cumylphenol. Besonders bevorzugt sind dabei Phenol und p-Cumylphenol.

Ausführungsformen und weitere Aspekte der vorliegenden Erfindung werden nachfolgend geschildert. Sie können beliebig miteinander kombiniert werden, sofern sich aus dem Kontext nicht eindeutig das Gegenteil ergibt.

In einer bevorzugten Ausführungsform des erfindungsgemäßen Verfahrens werden die während der Reaktion gebildetenThiole und/oder Selenole kontinuierlich entfernt. Insbesondere bei Einsatz von S,S'-Dimethyldithiocarbonat und/oder S,S'-Diethyldithiocarbonat, bei dem in der Reaktion Methanthiol bzw. Ethanthiol entsteht, kann das Entfernen durch Abdestillieren des gasförmigen Thiols erfolgen. Ebenso kann bei Einsatz von S,S'-Diphenyldithiocarbonat, bei dem in der Reaktion Thiophenol entsteht, das Entfernen durch Abdestillieren des Thiophenols erfolgen.

In einer weiteren Ausführungsform des erfindungsgemäßen Verfahrens wird die Reaktion für eine erste Zeitdauer bei einer ersten Temperatur und einem ersten Druck durchgeführt und anschließend für eine zweite Zeitdauer bei einer zweiten Temperatur und einem zweiten Druck durchgeführt, wobei weiterhin die zweite Temperatur größer als die erste Temperatur ist und der zweite Druck niedriger als der erste Druck ist.

Ohne auf eine Theorie festgelegt zu sein, wird angenommen, dass in einem ersten Schritt der Reaktion vorwiegend niedermolekulare Polycarbonate gebildet werden und in einem zweiten Schritt diese niedermolekularen Polycarbonate zu einem hochmolekularen Polycarbonat kondensieren. Die Erhöhung der Temperatur und die Verringerung des Druckes in der zweiten Stufe der Reaktion können dabei unabhängig voneinander einmalig, in mehreren Schritten oder graduiert erfolgen. Eingeschlossen ist insbesondere ein mehrstufiges Verfahren, bei dem die Reaktion für mindestens eine weitere Zeitdauer bei einer weiteren Temperatur und einem weiteren Druck, etc. durchgeführt wird. Bevorzugt ist die Temperatur in diesem weiteren Verfahrensschritt größer als die ersten beiden Temperaturen und der Druck niedriger als die ersten beiden Drücke.

Vorzugsweise beträgt die erste Temperatur 150 °C bis 210 °C und die zweite Temperatur beträgt 210 °C bis 400 °C. Besonders bevorzugt beträgt die erste Temperatur 175 °C bis 205 °C. Unabhängig davon ist eine zweite Temperatur von 250 °C bis 350 °C bevorzugt.

Es ist ebenfalls bevorzugt, dass der erste Druck 200 mbar bis 900 mbar beträgt und der zweite Druck 1 mbar bis 200 mbar beträgt. Besonders bevorzugt beträgt der erste Druck 250 mbar bis 600 mbar. Unabhängig davon ist ein zweiter Druck von $\leq$ 10 mbar bevorzugt.

Beispielsweise kann die Polycarbonatsynthese durch Umesterung eines Dithiocarbonats mit einem Bisphenol in der Schmelze wie folgt durchgeführt werden: in der ersten Stufe findet das Aufschmelzen des Bisphenols und des Katalysators mit dem Dithiocarbonat bei einer Temperatur von 170 bis 210°C unter verringertem Druck von 900 bis 200 mbar, vorzugsweise 600 bis 400 mbar in 0,01 bis 3 Stunden statt, wobei niedermolekulare Oligomere gebildet werden. In der zweiten Stufe der Reaktion wird die Herstellung des hochmolekularen Polycarbonats bei Temperaturen von 210 bis 400 °C, vorzugsweise 250 bis 350 °C und verminderten Drücken von höchstens 10 mbar in 0,01 bis 5 Stunden durchgeführt.

Das erfindungsgemäße Verfahren kann diskontinuierlich oder kontinuierlich durchgeführt werden, beispielsweise in Rührkesseln, Dünnschichtverdampfern, Fallfilmverdampfern, Rührkesselkaskaden, Extrudern, Knetern, einfachen Scheibenreaktoren oder Hochviskosscheibenreaktoren. Bevorzugt wird das Verfahren kontinuierlich durchgeführt.

Es ist ebenfalls möglich, dass die bei der zweiten Zeitdauer, der zweiten Temperatur und dem zweiten Druck durchgeführte Reaktion in einem Verdampfungsextruder, einem Scheibenreaktor oder einem Verdampfungskalandrierer durchgeführt wird.

In einer weiteren Ausführungsform des erfindungsgemäßen Verfahrens wird als Bisphenol Bisphenol-A, Bisphenol-F und/oder Bisphenol-TMC eingesetzt.

In einer weiteren Ausführungsform des erfindungsgemäßen Verfahrens stehen in der allgemeinen Formel (I) R und R' für Methyl, Ethyl oder Phenyl. Besonders bevorzugt ist Dimethyldithiocarbonat.

In einer weiteren Ausführungsform des erfindungsgemäßen Verfahrens ist die Verbindung der allgemeinen Formel (I) ein Dialkyldithiocarbonat, vorzugsweise Dimethyldithiocarbonat oder Diethyldithiocarbonat.

In einer weiteren Ausführungsform des erfindungsgemäßen Verfahrens ist der Katalysator ein Phosphoniumsalz oder ein bizyklisches Amin.

Bevorzugte Phosphoniumsalze sind solche der allgemeinen Formel (III)

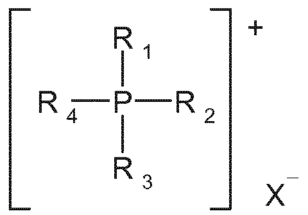

(III)

worin

$R_1$, $R_2$, $R_3$ und $R_4$ unabhängig voneinander die gleichen oder verschiedene $C_1$-bis $C_{18}$-Alkylene, $C_6$ bis $C_{10}$-Aryle oder $C_5$ bis $C_6$-Cycloalkyle bezeichnen können und $X^-$ für ein Anion stehen kann, bei dem das entsprechende Säure-Base-Paar $H^+ + X^- \rightarrow HX$ einen $pK_b$ Wert von < 11 hat.

Besonders bevorzugte Phosphoniumsalze sind Tetraphenylphosphoniumfluorid, Tetraphenylphosphonium-tetraphenylborat und Tetraphenylphosphoniumphenolat, insbesondere Tetraphenylphosphoniumphenolat.

Besonders bevorzugte Katalysatoren sind Tetraphenylphosphoniumphenolat und DBU.

In einer weiteren Ausführungsform des erfindungsgemäßen Verfahrens wird der Katalysator in mehreren Portionen über den Verlauf der Reaktion hinzugefügt. So kann beispielsweise die Katalysatorzugabe in drei gleichen Portionen erfolgen.

In einer weiteren Ausführungsform des erfindungsgemäßen Verfahrens umfasst dieses weiterhin den Schritt der Zugabe eines Diarylcarbonats oder Dialkylcarbonats zu dem erhaltenen Reaktionsprodukt. In einer alternativen Ausführungsform wird das Diarylcarbonat oder Dialkylcarbonat zu Beginn oder während der Reaktion der Verbindung der Formel (I) mit dem Bisphenol zugesetzt. Hierdurch lässt sich das Molekulargewicht der zuvor erhaltenen Polycarbonate weiter erhöhen. Ferner wird im Polycarbonat der Gehalt an Thioester- und OH-Gruppen verringert. Bevorzugt wird als Diarylcarbonat Diphenylcarbonat (DPC) eingesetzt. Die Menge des Diarylcarbonats oder Dialkylcarbonats kann beispielsweise 5 mol-% bis 15 mol-%, bezogen auf die Menge des ursprünglich eingesetzten Bisphenols, betragen.

Die Erfindung betrifft ebenfalls die Verwendung einer Verbindung der allgemeinen Formel I):

R-X-C(O)-X'-R' (I)

wobei

X und X' für S oder Se, bevorzugt für S, und
R und R' unabhängig voneinander für Alkyl oder Aryl oder
R und R' gemeinsam für eine Alkylenkette stehen,

als Umesterungsreagenz für die Herstellung von Polycarbonaten, umfassend den Schritt der Reaktion von Bisphenolen mit dem Umesterungsreagenz der Verbindung der allgemeinen Formel (I) in Gegenwart eines Katalysators. Hinsichtlich der Definitionen für R und R' sei auf die vorstehenden Ausführungen im Zusammenhang mit dem erfindungsgemäßen Verfahren verwiesen. Bevorzugt werden S,S'-Dialkyldithiocarbonate, insbesondere S,S'-Dimethyldithiocarbonat oder S,S'-Diethyldithiocarbonat, oder S,S'-Diaryldithiocarbonate, insbesondere S,S'-Diphenyldithiocarbonat, als Umesterungsreagenzien eingesetzt.

## Beispiele

Die vorliegende Erfindung wird anhand der nachfolgenden Beispiele und Vergleichsbeispiele näher erläutert, ohne jedoch darauf beschränkt zu sein.

Eingesetzte Umesterungsreagenzien:

| | |
|---|---|
| Dimethyldithiocarbonat | S,S'-Dimethyldithiocarbonat |
| Dimethylcarbonat | O,O'-Dimethylcarbonat |

Eingesetzte Bisphenole:

| | |
|---|---|
| Bisphenol-A | 2,2-Bis-(4-hydroxyphenyl)-propan |

Eingesetzte Polycarbonate als Referenzsubstanz:

| | |
|---|---|
| Makrolon | Aromatisches Homopolycarbonat basierend auf Bisphenol-A der Firma Bayer MaterialScience AG mit einem zahlenmittleren Molekulargewicht von $M_n$ = 13'900 g/mol und einer Dispersität von 2,4. |

Die Polymerisationsreaktion von Bisphenol-A mit Dimethyldithiocarbonat ergibt ein lineares Polycarbonat, welches als mögliche Endgruppen die in der Formel (Xa) gezeigten freien OH-Gruppen enthält,

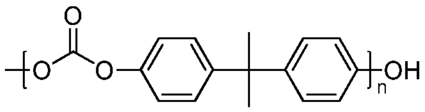

(Xa)

und/oder die in Formel (Xb) gezeigten unsymmetrischen Thioester enthält,

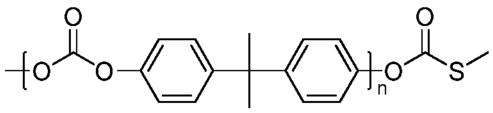

(Xb)

und/oder die in Formel (Xc) gezeigten alkylierten Phenolgruppen enthält.

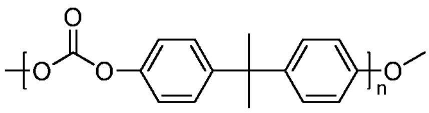

(Xc)

Bei Zusatz von Diphenylcarbonat (Vgl. Beispiel 3) wird ein Polycarbonat erhalten, welches als mögliche Endgruppen zusätzlich oder ausschließlich die in Formel (Xd) gezeigten monofunktionellen Phenolgruppen enthält.

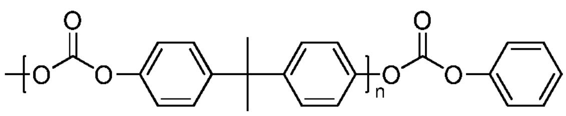

(Xd)

Die linearen polymeren Moleküle enthalten meist zwei Endgruppen der Formeln (Xa) bis (Xd), wobei jedes Molekül zwei gleiche oder zwei unterschiedliche Endgruppen enthalten kann.

Die Probe wurde jeweils in deuteriertem Chloroform gelöst und auf einem Spektrometer der Firma Bruker (AV400, 400 MHz) vermessen. Der Grad der Funktionalisierung des Bisphenol-A wurde mittels $^{1}$H-NMR Spektroskopie bestimmt. Hierzu wurden die Intensitäten der unterschiedlichen Resonanzen gegeneinander integriert.

Die relevanten Resonanzen im $^{1}$H-NMR Spektrum (bezogen auf TMS = 0 ppm), die zur Integration verwendet wurden, sind wie folgt:

I1: 1,59: $CH_3$-Gruppen der Bisphenol-A Wiederholungseinheiten

I2: 2,32: $CH_3$-Gruppe des unsymmetrischen Thioesters (Xb)

I3: 3,69: $CH_3$-Gruppe des alkylierten Phenols (Xc)

I4: 6,57 - 6,60 und 6,96 - 6,99: aromatische CH-Gruppen an Bisphenol-A und Phenylringen von terminalen Bisphenol-A Einheiten mit direkt gebundenen freien OH-Gruppen (Xa)

I5: 7,07 - 7,09 und 7,16 - 7,18: aromatische CH-Gruppen von Bisphenol-A basierten Wiederholungseinheiten und Phenylringen von terminalen Bisphenol-A Einheiten ohne direkt gebundene freie OH-Gruppen (Xa)

Die Angabe zu dem Grad der Funktionalisierung des Bisphenol-A bezieht sich auf den Anteil der umgesetzten Phenol-Gruppen des eingesetzten Bisphenol-A und ist in mol-% angegeben. Unter Berücksichtigung der relativen Intensitäten wurden die Werte wie folgt berechnet:

$$\text{Grad der Funktionalisierung} = I5 / (I4 + I5)$$

Das Zahlenmittel $M_n$ und das Gewichtsmittel $M_w$ des Molekulargewichts der entstandenen Polymere wurden mittels Gelpermeationschromatographie (GPC) bestimmt. Es wurde vorgegangen nach DIN 55672-1: "Gelpermeationschromatographie, Teil 1 - Tetrahydrofuran als Elutionsmittel" (SECurity GPC-System von PSS Polymer Service, Flussrate 1.0 ml/min; Säulen: 2×PSS SDV linear M, 8×300 mm, 5 μm; RID-Detektor). Dabei wurden Polystyrolproben bekannter Molmasse zur Kalibrierung verwendet.

Die Reaktion von Bisphenol mit einem Umesterungsreagenz wurde in einem Schlenk-Rohr mit aufgesetztem Rückflusskühler durchgeführt. Das Schlenk-Rohr wurde von außen mit einem elektrischen Heizmantel, der auf die angegebene Temperatur geregelt wurde, erhitzt. Die Reaktionsmischung wurde über ein Magnetrührstäbchen, das sich in der Reaktionsmischung befand, gerührt.

Beispiel 1: Reaktion von Bisphenol-A mit Dimethyldithiocarbonat in einem einstufigen Prozess

Bisphenol-A (5,71 g, 25,0 mmol) wurde in einem 100 mL Schlenk-Rohr mit aufgesetztem Rückflusskühler mit Dimethyldithiocarbonat (3,05 g, 25,0 mmol) und Tetraphenylphosphoniumphenolat (216 mg, 2,0 mol-% bezogen auf eingesetztes Carbonat) versetzt. Anschließend wurde die Reaktionsmischung mit einem elektrischen Heizmantel bei einem Druck von 750 mbar auf 200 °C für 6 Stunden erhitzt.

Es wurden 6,62 g eines viskosen Materials erhalten.

$^1$H-NMR Analyse im Bereich der aromatischen Wasserstoffe (5.5 - 8.5 ppm) zeigte 75 % Funktionalisierung des Bisphenol-A.

Die GPC-Analyse des Produkts ergab ein zahlenmittleres Molekulargewicht von $M_n$ = 570 g/mol und eine Polydispersität von 3,53.

Beispiel 2: Reaktion von Bisphenol-A mit Dimethyldithiocarbonat in einem zweistufigen Prozess

Bisphenol-A (5,71 g, 25,0 mmol) wurde in einem 100 mL Schlenk-Rohr mit aufgesetztem Rückflusskühler mit Dimethyldithiocarbonat (4,88 g, 40,0 mmol) und Tetraphenylphosphoniumphenolat (85 mg, 2,0 mol-% bezogen auf eingesetztes Carbonat) versetzt. Anschließend wurde die Reaktionsmischung in zwei Stufen erhitzt. Zuerst wurde die Mischung bei einem Druck von 500 mbar für eine Stunde unter Rückfluss auf 250 °C erhitzt. Anschließend wurde der Rückflusskühler gegen eine Destillationsbrücke getauscht. Die Reaktionsmischung wurde weiterhin auf 250 °C erhitzt, wobei zunächst für eine Stunde ein Argon-Strom durch die Reaktionsmischung geleitet wurde und anschließend der Druck für 30 Minuten auf 10 mbar reduziert wurde. Anschließend wurde das Gefäß geschlossen und die Reaktionsmischung bei einem Druck < 1 mbar für 2 Stunden auf 300 °C erhitzt. Dabei sublimierte ein bräunlicher Niederschlag an den oberen Gefäßwänden. Eine Ausbeute wurde nicht bestimmt.

$^1$H-NMR Analyse im Bereich der aromatischen Wasserstoffe (5,5 - 8,5 ppm) zeigte eine vollständige Funktionalisierung des Bisphenol-A.

Die GPC-Analyse des Produkts ergab ein zahlenmittleres Molekulargewicht von $M_n$ = 1'700 g/mol und eine Polydispersität von 1,94.

Beispiel 3: Reaktion von Bisphenol-A mit Dimethyldithiocarbonat in einem zweistufigen Prozess und Zugabe von Diphenylcarbonat zur Verringerung des Gehalts an Thioester- und OH-Gruppen im Produkt

*Polymerisation*

Bisphenol-A (5,71 g, 25,0 mmol) wurde in einem 100 mL Schlenk-Rohr mit aufgesetztem Rückflusskühler mit Dimethyldithiocarbonat (4,27 g, 35,0 mmol) und Tetraphenylphosphoniumphenolat (76 mg, 0,5 mol-% bezogen auf eingesetztes Carbonat) versetzt. Anschließend wurde die Reaktionsmischung in Stufen erhitzt. Zuerst wurde die Mischung bei einem Druck von 400 mbar für eine Stunde unter Rückfluss auf 220 °C erhitzt. Anschließend wurde der Rückflusskühler gegen eine Destillationsbrücke getauscht. Die Reaktionsmischung wurde bei einem Druck von 10 mbar für eine Stunde erhitzt, wobei die Temperatur schrittweise jeweils nach 20 Minuten von 220 °C auf 260 °C und dann 300 °C erhöht wurde.

*Zugabe von Diarylcarbonat oder Dialkylcarbonat*

Nun erfolgte die Zugabe von Diphenylcarbonat (DPC, 428 mg, 2 mmol). Anschließend wurde das Gefäß geschlossen und die Reaktionsmischung wurde unter einem Druck von < 1 mbar für 1 Stunde auf 300 °C erhitzt.

$^1$H-NMR Analyse im Bereich der aromatischen Wasserstoffe (5,5 - 8,5 ppm) zeigte 85 % Funktionalisierung des Bisphenol-A nach dem ersten Reaktionsschritt. Die $^1$H-NMR Analyse des Produktes stimmte in allen Punkten mit Makrolon überein.

Die GPC-Analyse des Produkts ergab ein zahlenmittleres Molekulargewicht von $M_n$ = 11’300 g/mol und eine Polydispersität von 4,340.

Es wurden 5,62 g Polycarbonat erhalten (87,8 % Ausbeute).

Beispiel 4 (Vergleichsbeispiel): Reaktion von Bisphenol-A mit Dimethylcarbonat

Bisphenol-A (5,71 g, 25,0 mmol) wurde in einem 100 mL Schlenk-Rohr mit aufgesetztem Rückflusskühler mit Dimethylcarbonat (3,15 g, 35,0 mmol) und Tetraphenylphosphoniumphenolat (76 mg, 0,5 mol-% bezogen auf eingesetztes Carbonat) versetzt. Anschließend wurde die Reaktionsmischung bei einem Druck von 400 mbar erhitzt. Es wurde ein starker Rückfluss beobachtet; ebenfalls bildete sich ein weißer Feststoff im Kolben. Die Temperatur der Reaktionsmischung stieg innerhalb einer Stunde auf eine maximale Temperatur von 73 °C.

Die Analyse des Produktgemisches durch $^1$H-NMR im Bereich der aromatischen Wasserstoffe (5,5 - 8,5 ppm) zeigte, dass die Reaktionsmischung hauptsächlich (> 60%) nicht umgesetztes Bisphenol-A neben nicht umgesetztem Dimethylcarbonat enthielt.

**Tabelle 1:** Vergleich der Ergebnisse der erfindungsgemäßen Beispiele 1-3 mit Vergleichsbeispiel 4

| Beispiel | Prozess | Grad der Funktionalisierung von Bisphenol-A [%] | Molekulargewicht des erhaltenen Produktes [g/mol] | Polydispersität |
|---|---|---|---|---|
| 1 | Einstufig | 75 | 570 | 3,53 |
| 2 | Zweistufig | 100 | 1’700 | 1,94 |
| 3 | Zweistufig | 100 | 11’300 | 4,34 |
| 4 (Vgl.) | Einstufig | 40 | - | - |

Ein Vergleich der Beispiele 1 bis 3 mit dem Vergleichsbeispiel 4 zeigt, dass bei Einsatz eines Dichalkogenidcarbonats als Umesterungsreagenz ein oligomeres Polycarbonat (Beispiel 1) oder polymeres Polycarbonat (Beispiele 2 und 3) erhalten wird, während bei Einsatz von Dimethylcarbonat als Umesterungsreagenz (Vergleichsbeispiel 4) Bisphenol-A mit Dimethylcarbonat nur in geringem Ausmaß umgesetzt wird und kein Polycarbonat erhalten wird.

Beispiel 5: Reaktion von Bisphenol-A mit Dimethyldithiocarbonat in einem zweistufigen Prozess

Bisphenol-A (5,71 g, 25,0 mmol) wurde in einem 100 mL Schlenk-Rohr mit aufgesetztem Rückflusskühler mit Dimethyldithiocarbonat (4,88 g, 40,0 mmol) und Tetraphenylphosphoniumphenolat (85 mg, 0,5 mol-% bezogen auf eingesetztes Carbonat) versetzt. Anschließend wurde die Reaktionsmischung in Stufen erhitzt. Zuerst wurde die Mischung bei einem Druck von 400 mbar für eine Stunde unter Rückfluss auf 220 °C erhitzt. Anschließend wurde der Rückflusskühler gegen eine Destillationsbrücke getauscht. Die Reaktionsmischung wurde bei einem Druck von 10 mbar

für eine Stunde erhitzt, wobei die Temperatur schrittweise jeweils nach 20 Minuten von 220 °C auf 260 °C und dann 300 °C erhöht wurde. Anschließend wurde das Gefäß geschlossen und die Reaktionsmischung bei einem Druck von < 1 mbar für 1 Stunde auf 300 °C erhitzt.

Es wurden 5,85 g Polycarbonat erhalten (91,4 % Ausbeute).

Die GPC-Analyse des Produkts ergab ein zahlenmittleres Molekulargewicht von $M_n$ = 10'000 g/mol und eine Polydispersität von 2,92.

$^1$H-NMR Analyse im Bereich der aromatischen Wasserstoffe (5,5 - 8,5 ppm) zeigte 90 % Funktionalisierung des Bisphenol-A nach dem ersten Reaktionsschritt. Die $^1$H-NMR Analyse des Produktes stimmte in allen wesentlichen Punkten mit Makrolon überein.

Ein Gelpermeationschromatogramm (GPC) des erhaltenen Polycarbonats in Vergleich zu Makrolon ist in FIG. 1 dargestellt. Die Kurve 1 ist dem Makrolon zugeordnet, Kurve 2 der erfindungsgemäßen Polymerprobe.

Beispiel 6: Reaktion von Bisphenol-A mit Dimethyldithiocarbonat in einem zweistufigen Prozess

Bisphenol-A (5,71 g, 25,0 mmol) wurde in einem 100 mL Schlenk-Rohr mit aufgesetztem Rückflusskühler mit Dimethyldithiocarbonat (4,88 g, 40,0 mmol) und 1,8-Diazabi-cyclo[5.4.0]undec-7-en (DBU, 60 mg, 1,0 mol-% bezogen auf eingesetztes Carbonat) versetzt. Anschließend wurde die Reaktionsmischung in Stufen erhitzt. Zuerst wurde die Mischung bei einem Druck von 500 mbar für eine Stunde unter Rückfluss auf 250 °C erhitzt. Anschließend wurde der Rückflusskühler gegen eine Destillationsbrücke getauscht. Die Reaktionsmischung wurde bei einem Druck von 10 mbar für eine Stunde erhitzt, wobei die Reaktionsmischung zunächst für eine halbe Stunde auf 250 °C, dann für eine weitere halbe Stunde auf 300 °C erhitzt wurde. Anschließend wurde das Gefäß geschlossen und die Reaktionsmischung bei einem Druck von < 1 mbar für 1 Stunde auf 300 °C erhitzt.

Es wurden 6,31 g Polycarbonat erhalten (98,6 % Ausbeute).

Die GPC-Analyse des Produkts ergab ein zahlenmittleres Molekulargewicht von $M_n$ = 3'700 g/mol und eine Polydispersität von 2,37.

$^1$H-NMR Analyse im Bereich der aromatischen Wasserstoffe (5,5 - 8,5 ppm) zeigte 90 % Funktionalisierung des Bisphenol-A nach dem ersten Reaktionsschritt. Die $^1$H-NMR Analyse des Produktes stimmte in allen wesentlichen Punkten mit Makrolon überein.

**Vergleich**

| Beispiel | Katalysator | Eingesetzte Menge an Katalysator [mol-%]* | Grad der Funktionalisierung von Bisphenol-A [%] | Molekulargewicht des erhaltenen Produktes [g/mol] | Polydispersität |
|---|---|---|---|---|---|
| 3 | Tetraphenylphosphoniumphenolat | 2,0 | 100 | 11'300 | 4,34 |
| 5 | Tetraphenylphosphoniumphenolat | 0,5 | > 95 | 10'000 | 2,92 |
| 6 | DBU | 1,0 | ~ 95 | 3'700 | 2,37 |
| * mol-% bezogen auf Carbonat | | | | | |

Ein Vergleich der Beispiele 3, 5 und 6 zeigt, dass für die Umsetzung des Dichalkogenidcarbonats mit Bisphenol-A Tetraarylphosphoniumarylate (Beispiele 3 und 5) und bizyklische Amin-Verbindungen (Beispiel 6) als Katalysator eingesetzt werden können.

Beispiel 7: Reaktion von Bisphenol-A mit Dimethyldithiocarbonat in einem zweistufigen Prozess

Bisphenol-A (5,71 g, 25,0 mmol) wurde in einem 100 mL Schlenk-Rohr mit aufgesetztem Rückflusskühler mit Dimethyldithiocarbonat (4,88 g, 40,0 mmol) und Tetraphenylphosphoniumphenolat (85 mg, 0,5 mol-% bezogen auf eingesetztes Carbonat) versetzt. Anschließend wurde die Reaktionsmischung in Stufen erhitzt. Zuerst wurde die Mischung bei einem Druck von 750 mbar für eine Stunde unter Rückfluss auf 200 °C erhitzt. Anschließend wurde der Rückflusskühler gegen eine Destillationsbrücke getauscht. Die Reaktionsmischung wurde bei einem Druck von 10 mbar für eine Stunde erhitzt, wobei die Temperatur für 30 Minuten bei 200 °C gehalten wurde und dann schrittweise jeweils für 15 Minuten auf 250 °C und dann 300 °C erhöht wurde. Anschließend wurde das Gefäß geschlossen und die Reaktionsmischung bei einem Druck von < 1 mbar für 1 Stunde auf 300 °C erhitzt.
Es wurden 5,56 g Polycarbonat erhalten (86,9 % Ausbeute).
Die GPC-Analyse des Produkts ergab ein zahlenmittleres Molekulargewicht von $M_n$ = 6'500 g/mol und eine Polydispersität von 2,48.
$^1$H-NMR Analyse im Bereich der aromatischen Wasserstoffe (5,5 - 8,5 ppm) zeigte 80 % Funktionalisierung des Bisphenol-A nach dem ersten Reaktionsschritt. Die $^1$H-NMR Analyse des Produktes stimmte in allen wesentlichen Punkten mit Makrolon überein.

**Vergleich**

| Beispiel | 1. Stufe | 2. Stufe | 3. Stufe | Molekulargewicht des erhaltenen Produktes [g/mol] | Polydispersität |
|---|---|---|---|---|---|
| 5 | 400 mbar, 220°C | 10 mbar, 220 → 300°C | < 1 mbar, 300°C | 10'000 | 2,92 |
| 7 | 750 mbar, 200°C | 10 mbar, 200 → 300°C | < 1 mbar, 300°C | 6'500 | 2,48 |

Ein Vergleich der Beispiele 5 und 7 zeigt, dass für die Umsetzung des Dichalkogenidcarbonats mit Bisphenol-A unterschiedliche Temperaturen und Druckstufen verwendet werden können.
FIG. 2 zeigt einen Vergleich der Gelpermeationschromatogramme von Makrolon (Kurve 3) und dem erhaltenen Reaktionsprodukt aus einer Polymerisation von Bisphenol-A mit Dimethyldithiocarbonat ohne Zugabe von DPC (Beispiel 5) nach verschiedenen Reaktionszeiten (Kurve 4: 2 Stunden; Kurve 5: 3 Stunden), und dem erhaltenen Reaktionsprodukt aus einer Reaktion mit Zugabe von DPC (Beispiel 3) nach 2 Stunden Reaktionszeit bei verschiedenen Reaktionszeiten (Kurve 6: 2 Stunden, unmittelbar vor Zugabe von DPC; Kurve 7: 3 Stunden, nach vollständiger Polymerisation). Es zeigt sich deutlich die Erhöhung des Molekulargewichts durch die DPC Zugabe.

## Patentansprüche

1. Verfahren zur Herstellung von Polycarbonaten, umfassend den Schritt der Reaktion von Bisphenolen mit einem Umesterungsreagenz in Gegenwart eines Katalysators, **dadurch gekennzeichnet, dass** das Umesterungsreagenz eine Verbindung der allgemeinen Formel (I) umfasst:

$$R\text{-}X\text{-}C(O)\text{-}X'\text{-}R' \qquad (I)$$

wobei

X und X' unabhängig voneinander für S oder Se stehen, und,
R und R' unabhängig voneinander für Alkyl oder Aryl oder
R und R' gemeinsam für eine Alkylenkette stehen.

2. Verfahren gemäß Anspruch 1, wobei X und X' in der allgemeinen Formel (I) für S stehen.

3. Verfahren gemäß Anspruch 1 oder 2, wobei die während der Reaktion entstehenden Verbindungen R-X-H und R'-X'-H kontinuierlich entfernt werden.

4. Verfahren gemäß einem der Ansprüche 1 bis 3, wobei die Reaktion für eine erste Zeitdauer bei einer ersten Temperatur und einem ersten Druck durchgeführt wird und anschließend für eine zweite Zeitdauer bei einer zweiten Temperatur und einem zweiten Druck durchgeführt wird, und wobei weiterhin die zweite Temperatur größer als die erste Temperatur ist und der zweite Druck niedriger als der erste Druck ist.

5. Verfahren gemäß Anspruch 4, wobei die erste Temperatur 150 °C bis 210 °C beträgt und die zweite Temperatur 210 °C bis 400 °C beträgt.

6. Verfahren gemäß Anspruch 4 oder 5, wobei der erste Druck 200 mbar bis 900 mbar beträgt und der zweite Druck 1 mbar bis 200 mbar beträgt.

7. Verfahren gemäß einem der Ansprüche 4 bis 6, wobei die bei der zweiten Zeitdauer, der zweiten Temperatur und dem zweiten Druck durchgeführte Reaktion in einem Verdampfungsextruder, einem Scheibenreaktor oder einem Verdampfungskalandrierer durchgeführt wird.

8. Verfahren gemäß einem der Ansprüche 1 bis 7, wobei in der allgemeinen Formel (I) R und R' für Methyl, Ethyl oder Phenyl stehen.

9. Verfahren gemäß einem der Ansprüche 1 bis 7, wobei das Umesterungsreagenz ein Dialkyldithiocarbonat ist.

10. Verfahren gemäß einem der Ansprüche 1 bis 9, wobei die eingesetzten Bisphenole Bisphenol-A, Bisphenol-F oder Bisphenol-TMC umfassen.

11. Verfahren gemäß einem der Ansprüche 1 bis 10, wobei der Katalysator ein Phosphoniumsalz oder ein bizyklisches Amin ist.

12. Verfahren gemäß einem der Ansprüche 1 bis 11, wobei der Katalysator in mehreren Portionen über den Verlauf der Reaktion hinzugefügt wird.

13. Verfahren gemäß einem der Ansprüche 1 bis 12, weiterhin umfassend den Schritt der Zugabe eines Diarylcarbonats oder Dialkylcarbonats zu dem erhaltenen Reaktionsprodukt.

14. Verwendung einer Verbindung der allgemeinen Formel (I):

R-X-C(O)-X'-R' (I),

wobei

X und X' für S oder Se, und
R und R' unabhängig voneinander für Alkyl oder Aryl oder
R und R' gemeinsam für eine Alkylenkette stehen,

als Umesterungsreagenz für die Herstellung von Polycarbonaten, umfassend den Schritt der Reaktion von Bisphenolen mit dem Umesterungsreagenz der Verbindung der allgemeinen Formel (I) in Gegenwart eines Katalysators.

## Claims

1. Process for preparing polycarbonates, comprising the step of reacting bisphenols with a transesterifying reagent in the presence of a catalyst, **characterized in that** the transesterifying reagent comprises a compound of the general formula (I):

R-X-C(O)-X'-R' (I)

where

X and X’ are each independently S or Se, and
R and R’ are each independently alkyl or aryl or
R and R’ together are an alkylene chain.

2. Process according to Claim 1, wherein X and X’ in the general formula (I) are S.

3. Process according to Claim 1 or 2, wherein the compounds R-X-H and R’-X’-H formed during the reaction are removed continuously.

4. Process according to any of Claims 1 to 3, wherein the reaction is conducted for a first period of time at a first temperature and a first pressure and then for a second period of time at a second temperature and a second pressure, and wherein additionally the second temperature is greater than the first temperature and the second pressure is lower than the first pressure.

5. Process according to Claim 4, wherein the first temperature is 150°C to 210°C and the second temperature is 210°C to 400°C.

6. Process according to Claim 4 or 5, wherein the first pressure is 200 mbar to 900 mbar and the second pressure is 1 mbar to 200 mbar.

7. Process according to any of Claims 4 to 6, wherein the reaction conducted for the second period of time at the second temperature and the second pressure is conducted in an evaporating extruder, a disc reactor or an evaporating calender.

8. Process according to any of Claims 1 to 7, wherein R and R’ in the general formula (I) are methyl, ethyl or phenyl.

9. Process according to any of Claims 1 to 7, wherein the transesterifying reagent is a dialkyl dithiocarbonate.

10. Process according to any of Claims 1 to 9, wherein the bisphenols used include bisphenol A, bisphenol F or bisphenol TMC.

11. Process according to any of Claims 1 to 10, wherein the catalyst is a phosphonium salt or a bicyclic amine.

12. Process according to any of Claims 1 to 11, wherein the catalyst is added in two or more portions over the course of the reaction.

13. Process according to any of Claims 1 to 12, further comprising the step of adding a diaryl carbonate or dialkyl carbonate to the reaction product obtained.

14. Use of a compound of the general formula (I):

R-X-C(O)-X’-R’ (I),

where

X and X’ are S or Se, and
R and R’ are each independently alkyl or aryl or
R and R’ together are an alkylene chain,

as transesterifying reagent for the preparation of polycarbonates, comprising the step of reacting bisphenols with the transesterifying reagent of the compound of the general formula (I) in the presence of a catalyst.

## Revendications

1. Procédé pour la préparation de polycarbonates, comprenant l'étape de la réaction de bisphénols avec un réactif de transestérification en présence d'un catalyseur, **caractérisé en ce que** le réactif de transestérification comprend un composé de formule générale (I) :

   R-X-C(O)-X'-R'  (I)

   X et X' représentant indépendamment l'un de l'autre S ou Se, et,
   R et R' représentant indépendamment l'un de l'autre alkyle ou aryle ou
   R et R' représentant ensemble une chaîne alkylène.

2. Procédé selon la revendication 1, X et X' représentant S dans la formule générale (I).

3. Procédé selon la revendication 1 ou 2, les composés R-X-H et R'-X'-H produits pendant la réaction étant éliminés en continu.

4. Procédé selon l'une quelconque des revendications 1 à 3, la réaction étant mise en œuvre pendant une première période de temps à une première température et à une première pression et étant ensuite mise en œuvre pendant une deuxième période de temps à une deuxième température et à une deuxième pression, et en outre la deuxième température étant supérieure à la première température et la deuxième pression étant inférieure à la première pression.

5. Procédé selon la revendication 4, la première température étant de 150 °C à 210 °C et la deuxième température étant de 210 °C à 400 °C.

6. Procédé selon la revendication 4 ou 5, la première pression étant de 200 mbars à 900 mbars et la deuxième pression étant de 1 mbar à 200 mbars.

7. Procédé selon l'une quelconque des revendications 4 à 6, la réaction mise en œuvre lors de la deuxième période de temps, à la deuxième température et à la deuxième pression étant mise en œuvre dans une extrudeuse à évaporation, dans un réacteur à disques ou dans une calandre d'évaporation.

8. Procédé selon l'une quelconque des revendications 1 à 7, dans lequel dans la formule générale (I) R et R' représentent méthyle, éthyle ou phényle.

9. Procédé selon l'une quelconque des revendications 1 à 7, le réactif de transestérification étant un dialkyldithiocarbonate.

10. Procédé selon l'une quelconque des revendications 1 à 9, les bisphénols utilisés comprenant le bisphénol-A, le bisphénol-F ou le bisphénol-TMC.

11. Procédé selon l'une quelconque des revendications 1 à 10, le catalyseur étant un sel de phosphonium ou une amine bicyclique.

12. Procédé selon l'une quelconque des revendications 1 à 11, le catalyseur étant ajouté en plusieurs portions au cours de la réaction.

13. Procédé selon l'une quelconque des revendications 1 à 12, comprenant en outre l'étape d'ajout d'un diarylcarbonate ou d'un dialkylcarbonate au produit de réaction obtenu.

14. Utilisation d'un composé de formule générale (I) :

   R-X-C(O)-X'-R'  (I)

   X et X' représentant S ou Se, et,
   R et R' représentant indépendamment l'un de l'autre alkyle ou aryle ou
   R et R' représentant ensemble une chaîne alkylène

en tant que réactif de transestérification pour la préparation de polycarbonates, comprenant l'étape de la réaction de bisphénols avec le réactif de transestérification du composé de formule générale (I) en présence d'un catalyseur.

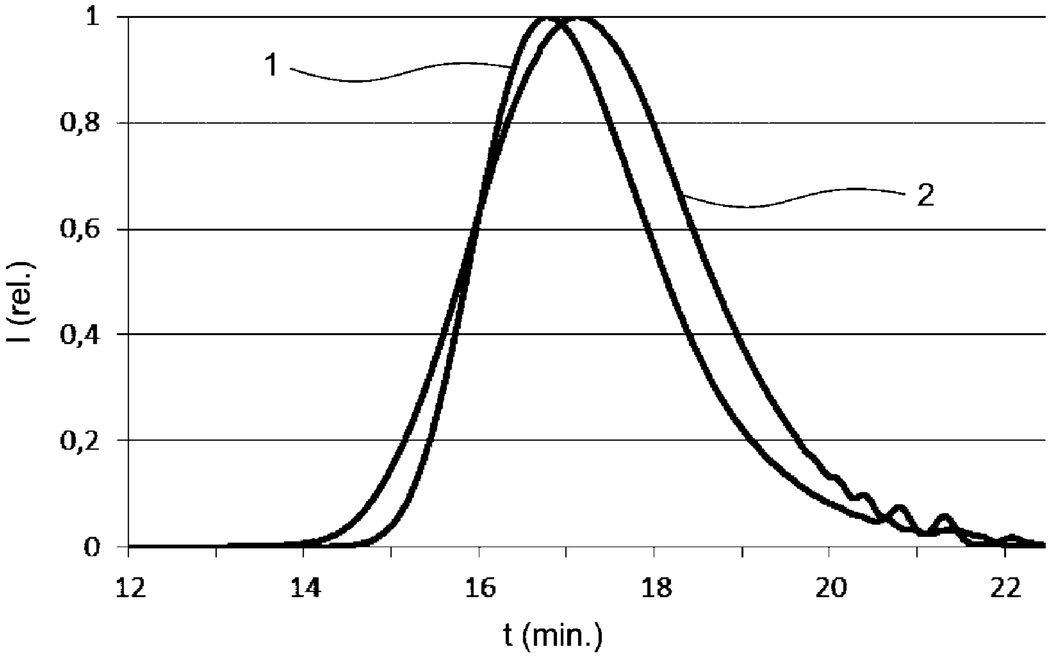
1
0,8
0,6
0,4
0,2
0
I (rel.)
12
14
16
18
20
22
t (min.)
1
2

FIG. 1

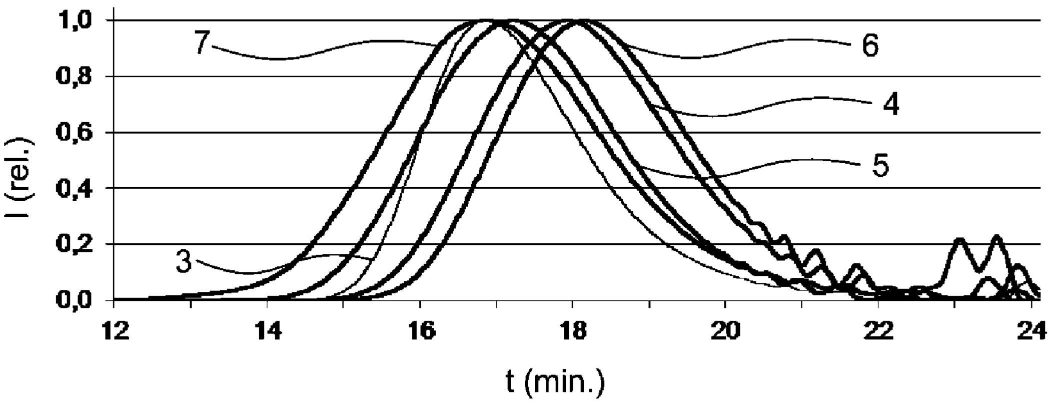
1,0
0,8
0,6
0,4
0,2
0,0
I (rel.)
12
14
16
18
20
22
24
t (min.)
7
6
4
5
3

FIG. 2

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 5399659 A
- US 5340905 A
- EP 0781760 A1
- WO 2004016577 A1
- WO 9703104 A1
- EP 2586787 A1
- US 2003055199 A
- WO 2008044575 A1
- WO 2007069529 A
- WO 2008065874 A
- US 2999835 A
- US 3148172 A
- US 2991273 A
- US 3271367 A
- US 4982014 A
- US 2999846 A
- DE 1570703 A
- DE 2063050 A
- DE 2036052 A
- DE 2211956 A
- DE 3832396 A
- FR 1561518 A
- EP 335214 A
- DE 3007934 A


### In der Beschreibung aufgeführte Nicht-Patentliteratur


- *Catal. Commun.,* 2013, vol. 33, 20-23
- *Green Chem.,* 2003, vol. 5, 497-507
- **VON KATALYSATOREN.** *Tetrahedron Lett.,* 1974, vol. 34, 2899-2900
- *Synlett,* 2005, vol. 10, 1535-1538
- **VON H. SCHNELL.** Chemistry and Physics of Polycarbonates. Interscience Publishers, 1964, 28, , 102
- **VON D.G. LEGRAND ; J.T. BENDLER.** Handbook of Polycarbonate Science and Technology. Marcel Dekker, 2000, 72